# DEMANDE DE BREVET EUROPEEN

(11) **EP 3 057 023 A1**
(43) Date de publication de la demande: **17.08.2016**
(21) Numéro de dépôt: 15305198.2
(22) Date de dépôt: 11.02.2015
(51) Int. Cl.: G06F 21/31, G06F 21/36, H04W 12/06, H04L 9/32

(54) **Procédé de différenciation d'un être humain d'un robot**

(71) Demandeur: GEMALTO SA, 92190 Meudon (FR)
(72) Inventeur: Hugot, Didier, 13881 GEMENOS Cedex (FR)
(74) Mandataire: Scheer, Luc

(57) **Abrégé**

L'invention concerne un procédé de différenciation d'un être humain d'un robot, le procédé consistant à :
- afficher sur un écran tactile (11) d'un terminal de télécommunications (10) une image (44) comprenant au moins une zone (40-43) sur laquelle ledit utilisateur est invité à exercer une pression ;
- transmettre les coordonnées de l'image (44) où l'utilisateur a exercé ladite pression à une entité ayant généré l'image (44) ;
- vérifier au niveau de cette entité si les coordonnées correspondent à l'endroit où la zone (40-43) était présente dans l'image (44) et :
- si ladite vérification est positive, considérer au niveau de ladite entité que ladite pression a été exercée par un être humain ;
- si ladite vérification est négative, considérer au niveau de ladite entité que ladite pression n'a pas été exercée par un être humain.

## Description

Le domaine de l'invention est celui des télécommunications. Plus précisément, la présente invention concerne notamment un procédé permettant de différencier un être humain d'un robot lors d'une transaction par Internet, par exemple lors d'un enregistrement pour bénéficier d'un service, tel que la création d'une adresse e-mail, la consultation d'un document ou la validation d'un paiement.

Il est connu que des robots peuvent être utilisés pour valider des opérations réalisées à l'aide d'un terminal de télécommunications connecté à un site Internet (voir notamment l'article posté sur http://www.xmco.fr/article-captcha.html). On entend par terminal de télécommunications un appareil électronique tel qu'un téléphone mobile, une tablette, un smartphone ou encore un ordinateur avec écran tactile. Afin de s'assurer qu'il existe bien une personne physique derrière le terminal de télécommunications, il a été proposé de transmettre à ce terminal de télécommunications un captcha (Completely Automated Public Turing test to tell Computers and Humans Apart), ce captcha étant par exemple un nombre, des lettres ou une combinaison de ces derniers, non reconnaissables par un robot. L'utilisateur du terminal de télécommunications est invité à entrer manuellement dans un champ le captcha qui lui a été transmis, afin de prouver qu'il est bien un être humain.

Le principal problème posé par les captchas est que ceux-ci sont de plus en plus complexes à être lus par les êtres humains, cette complexité étant volontairement augmentée pour se prémunir de logiciels de plus en plus aptes à déchiffrer des captchas. C'est pourquoi l'utilisateur a souvent la possibilité de demander un autre captcha si le captcha qui lui est présenté lui est illisible, jusqu'à ce qu'il réussisse à déchiffrer un captcha qui lui a été transmis.

Cette solution est cependant fastidieuse pour l'utilisateur.

La présente invention a pour objectif de fournir une solution permettant de différencier aisément un être humain d'un robot à l'occasion d'une transaction ou d'une demande de service par Internet.

Cet objectif est atteint grâce à un procédé de différenciation d'un être humain d'un robot, ce procédé consistant à :
- afficher sur un écran tactile d'un terminal de télécommunications une image comprenant au moins une zone sur laquelle son utilisateur est invité à exercer une pression ;
- transmettre les coordonnées de l'image où l'utilisateur a exercé la pression à une entité ayant généré cette image ;
- vérifier au niveau de l'entité si les coordonnées correspondent à l'endroit où la zone était présente dans l'image et :
   - si la vérification est positive, considérer au niveau de l'entité que la pression a été exercée par un être humain ;
   - si la vérification est négative, considérer au niveau de l'entité que la pression n'a pas été exercée par un être humain.

Dans un mode de mise en oeuvre, l'entité est une application embarquée dans le terminal de télécommunications.

Dans un autre mode de mise en oeuvre, l'entité est un site Internet distant avec lequel le terminal de télécommunications est en communication.

Préférentiellement, l'image comprend plusieurs zones sur lesquelles l'utilisateur est invité à exercer des pressions et le procédé consiste à :
- transmettre les coordonnées de l'image où l'utilisateur a exercé les pressions à une entité ayant généré l'image ;
- vérifier au niveau de cette entité si les coordonnées correspondent aux endroits où les zones étaient présentes dans l'image et :
   - si la vérification est positive, considérer au niveau de l'entité que les pressions ont été exercées par un être humain ;
   - si ladite vérification est négative, considérer au niveau de l'entité que les pressions n'ont pas été exercées par un être humain.

Dans un mode de mise en oeuvre préférentiel, les pressions sont des pressions successives sur les zones.

Avantageusement, les zones comprennent des chiffres croissants d'une zone à l'autre et l'utilisateur est invité à exercer des pressions sur les zones dans l'ordre croissant des chiffres.

Préférentiellement, les pressions sont des pressions simultanées sur les zones.

L'invention concerne également une entité comprenant un logiciel de différenciation d'un être humain d'un robot, cette entité comprenant des moyens pour :
- générer et afficher sur un écran tactile d'un terminal de télécommunications une image comprenant au moins une zone (13, 14-17, 22-24, 30-32, 40-43) sur laquelle son utilisateur est invité à exercer une pression ;
- transmettre les coordonnées de l'image où l'utilisateur a exercé la pression à cette entité ;
- vérifier au niveau de l'entité si les coordonnées correspondent à l'endroit où la zone était présente dans l'image et :
   - si la vérification est positive, considérer au niveau de l'entité que la pression a été exercée par un être humain ;
   - si la vérification est négative, considérer au niveau de l'entité que la pression n'a pas été exercée par un être humain.

L'entité peut être constituée par le terminal de télécommunications ou par un site Internet distant avec lequel le terminal de télécommunications est en communication.

D'autres caractéristiques et avantages de l'invention apparaitront à la lecture de la description suivante d'un mode de mise en oeuvre préférentiel, donné à titre illustratif et non limitatif, et des figures annexées dans lesquelles :
- La figure 1 représente un terminal de télécommunications sur l'écran duquel est affichée une zone ayant la forme d'un cercle ;
- La figure 2 représente un terminal de télécommunications sur l'écran duquel sont affichées quatre zones ;
- La figure 3 représente un terminal de télécommunications sur l'écran duquel sont affichées trois zones à sélectionner successivement ;
- La figure 4 représente un terminal de télécommunications sur l'écran duquel sont affichées trois zones à sélectionner simultanément ;
- La figure 5 représente un terminal de télécommunications sur l'écran duquel sont affichées quatre zones à sélectionner selon un mode mixte.

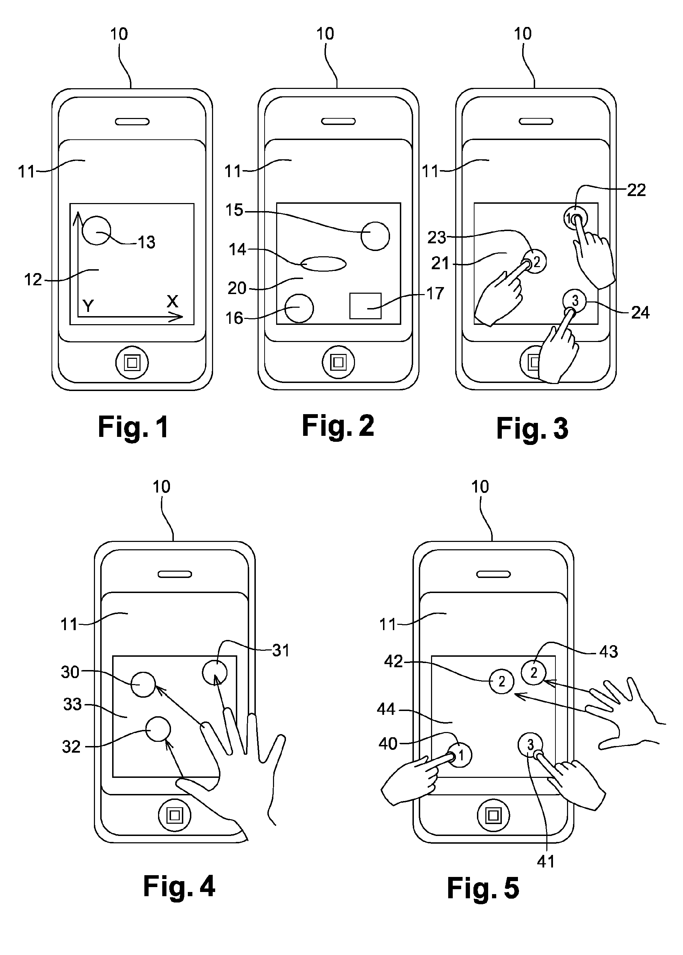

La figure 1 représente un terminal de télécommunications 10. Le terminal 10 est ici un smartphone avec écran tactile 11. Selon l'invention, une entité génère une image 12. Cette entité peut être une application embarquée dans le terminal 10 ou alors un site Internet distant avec lequel le terminal 10 est en communication.

Dans ce mode de mise en oeuvre, l'image 12 comprend une zone 13 ayant la forme d'un cercle. A l'affichage de cette image ou précédemment, l'utilisateur du terminal 10 est invité à exercer une pression (avec doigt ou un stylet) sur la zone 13. Le terminal 10 détecte l'endroit où l'utilisateur a exercé une pression sur l'écran 11 (le terminal 10 comprend à cet effet une application détectant les coordonnées en X et en Y où l'appui a été effectué).

Ces coordonnées sont ensuite transmises à l'entité ayant généré l'image 12. Cette entité vérifie alors si ces coordonnées correspondent à l'endroit où la zone 13 était présente dans l'image 12 et :
- si la vérification est positive, l'entité considère que la pression a été exercée par un être humain ;
- si la vérification est négative, l'entité considère que la pression n'a pas été exercée par un être humain.

Ceci permet de différencier par l'entité si la pression a été exercée par un être humain ou un robot.

La figure 2 représente un terminal de télécommunications sur l'écran duquel sont affichées quatre zones. Ces zones sont référencées 14-17. Elles sont ici de formes différentes. L'utilisateur est ici invité à sélectionner ces quatre zones, dans un ordre indifférent. De même que précédemment, l'entité ayant généré cette image (référencée 20), est chargée de vérifier que l'utilisateur a bien sélectionné ces quatre zones, afin de déterminer s'il s'agit d'un robot ou d'un être humain, à l'aide des coordonnées (en X et en Y) de ces zones.

Sur la figure 3, trois zones à sélectionner successivement sont représentées. Elles sont toutes comprises dans une image 21. La zone 22 porte par exemple le chiffre 1, la zone 23 le chiffre 2 et la zone 24 le chiffre 3. L'utilisateur doit sélectionner ces différentes zones dans l'ordre indiqué (il commence par la zone 22, puis la zone 23 et enfin la zone 24). Ici, non seulement les coordonnées en X et en Y des zones sont vérifiées par l'entité qui les a générées, mais également la succession de leurs sélections. Si l'utilisateur a bien sélectionné successivement les zones 22, 23 et 24, l'entité considérera qu'il s'agit bien d'un être humain et non pas d'un robot.

La figure 4 représente un terminal de télécommunications 10 sur l'écran 11 duquel sont affichées trois zones 30 à 32 dans une image 33, ces zones étant à sélectionner simultanément par l'utilisateur. Un appui simultané sur ces trois zones permet à l'entité de distinguer s'il s'agit d'un robot ou d'un humain (appui sur des coordonnées X et Y connues de l'entité et appui simultané sur ces zones).

La figure 5 représente un terminal de télécommunications 10 sur l'écran duquel sont affichées quatre zones 40 à 43 à sélectionner selon un mode mixte. Ces zones sont présentes dans une image 44.

Ce mode mixte correspond ici à :
- Sélectionner d'abord la zone 40 (référencée 1)
- Sélectionner ensuite simultanément les zones 42 et 43 (référencées 2)
- Finalement, sélectionner la zone 41 (référencée 3).

Si les zones affichées sont sélectionnées dans le bon ordre, avec les bonnes coordonnées en X et en Y, l'entité qui les a générées considérera qu'il s'agit d'un être humain. Dans le cas contraire, l'entité rejettera la transaction ou la demande d'authentification. Il est également possible d'afficher une autre image.

L'invention concerne également une entité comprenant un logiciel de différenciation d'un être humain d'un robot, cette entité comprenant des moyens pour :
- générer et afficher sur un écran tactile d'un terminal de télécommunications une image comprenant au moins une zone sur laquelle son utilisateur est invité à exercer une pression ;
- transmettre les coordonnées de l'image où l'utilisateur a exercé la pression à l'entité ;
- vérifier au niveau de l'entité si les coordonnées correspondent à l'endroit où la zone était présente dans l'image et :
   - si la vérification est positive, considérer au niveau de l'entité que la pression a été exercée par un être humain ;
   - si la vérification est négative, considérer au niveau de l'entité que la pression n'a pas été exercée par un être humain.

Comme précédemment indiqué, l'entité peut être constituée par le terminal de télécommunications ou par un site Internet distant avec lequel le terminal de télécommunications est en communication.

En conclusion, la présente invention propose :
- D'utiliser un écran tactile comprenant une ou plusieurs zones (par exemple des fromes rondes ou carrées), chaque zone pouvant contenir un indicateur de séquence d'ordre dans lequel les zones doivent être activées ;
- Et différentes options sont possibles :
- Une touche unique : l'utilisateur a seulement à appuyer sur la zone représentée ;
- Des zones à sélectionner successivement ;
- Des zones à sélectionner simultanément ;
- Une combinaison des options précédemment mentionnées ;
- Le respect (ou non) d'une sélection successive de zones ;
- Le fait de sélectionner une zone non représentée entraîne une invalidation de la reconnaissance du captcha.

L'application qui génère les images est par exemple une application écrite en C ou en Java locale (dans le terminal 10). Elle utilise des composants graphiques qui existent nativement dans le système d'exploitation. Lorsque les zones ont été correctement sélectionnées, l'utilisateur est redirigé vers une autre page html.

## Revendications

1. Procédé de différenciation d'un être humain d'un robot, ledit procédé consistant à :
- afficher sur un écran tactile (11) d'un terminal de télécommunications (10) une image (12, 20, 21, 33, 44) comprenant au moins une zone (13, 14-17, 22-24, 30-32, 40-43) sur laquelle son utilisateur est invité à exercer une pression ;
- transmettre les coordonnées de l'image (12, 20, 21, 33, 44) où ledit utilisateur a exercé ladite pression à une entité ayant généré ladite image (12, 20, 21, 33, 44) ;
- vérifier au niveau de ladite entité si lesdites coordonnées correspondent à l'endroit où ladite zone (13, 14-17, 22-24, 30-32, 40-43) était présente dans ladite image (12, 20, 21, 33, 44) et :
- si ladite vérification est positive, considérer au niveau de ladite entité que ladite pression a été exercée par un être humain ;
- si ladite vérification est négative, considérer au niveau de ladite entité que ladite pression n'a pas été exercée par un être humain.

2. Procédé selon la revendication 1, **caractérisé en ce que** ladite entité est une application embarquée dans ledit terminal de télécommunications (10).

3. Procédé selon la revendication 1, **caractérisé en ce que** ladite entité est un site Internet distant avec lequel ledit terminal de télécommunications (10) est en communication.

4. Procédé selon l'une des revendications 1 à 3, **caractérisé en ce que** ladite image (12, 20, 21, 33, 44) comprend plusieurs zones (14-17, 22-24, 30-32, 40-43) sur lesquelles ledit utilisateur est invité à exercer des pressions et **en ce qu'**il consiste à :
- transmettre les coordonnées de l'image (12, 20, 21, 33, 44) où ledit utilisateur a exercé lesdites pressions à une entité ayant généré ladite image (12, 20, 21, 33, 44) ;
- vérifier au niveau de ladite entité si lesdites coordonnées correspondent aux endroits où lesdites zones (13, 14-17, 22-24, 30-32, 40-43) étaient présentes dans ladite image (12, 20, 21,33,44) et:
- si ladite vérification est positive, considérer au niveau de ladite entité que lesdites pressions ont été exercées par un être humain ;
- si ladite vérification est négative, considérer au niveau de ladite entité que lesdites pressions n'ont pas été exercées par un être humain.

5. Procédé selon la revendication 4, **caractérisé en ce que** lesdites pressions sont des pressions successives sur lesdites zones (13, 14-17, 22-24, 30-32, 40-43).

6. Procédé selon la revendication 5, **caractérisé en ce que** lesdites zones (13, 14-17, 22-24, 30-32, 40-43) comprennent des chiffres croissants d'une zone à l'autre et **en ce que** ledit utilisateur est invité à exercer des pressions sur lesdites zones (13, 14-17, 22-24, 30-32, 40-43) dans l'ordre croissant desdits chiffres.

7. Procédé selon la revendication 4, **caractérisé en ce que** lesdites pressions sont des pressions simultanées sur lesdites zones (13, 14-17, 22-24, 30-32, 40-43).

8. Entité comprenant un logiciel de différenciation d'un être humain d'un robot, ladite entité comprenant des moyens pour :
- générer et afficher sur un écran tactile d'un terminal de télécommunications une image (12, 20, 21, 33, 44) comprenant au moins une zone (13, 14-17, 22-24, 30-32, 40-43) sur laquelle son utilisateur est invité à exercer une pression ;
- transmettre les coordonnées de l'image (12, 20, 21, 33, 44) où ledit utilisateur a exercé ladite pression à ladite entité ;
- vérifier au niveau de ladite entité si lesdites coordonnées correspondent à l'endroit où ladite zone (13, 14-17, 22-24, 30-32, 40-43) était présente dans ladite image (12, 20, 21, 33, 44) et :
- si ladite vérification est positive, considérer au niveau de ladite entité que ladite pression a été exercée par un être humain ;
- si ladite vérification est négative, considérer au niveau de ladite entité que ladite pression n'a pas été exercée par un être humain.

9. Entité selon la revendication 8, **caractérisée en ce qu'**elle est constituée par ledit terminal de télécommunications (10).

10. Entité selon la revendication 8, **caractérisée en ce qu'**elle est constituée par un site Internet distant avec lequel ledit terminal de télécommunications (10) est en communication.
